# EUROPEAN PATENT APPLICATION

(11) **EP 3 315 831 A1**
(43) Date of publication of application: **02.05.2018**
(21) Application number: 16817754.1
(22) Date of filing: 20.06.2016
(51) Int. Cl.: F16J 15/34

(54) **SLIDING COMPONENT**

(30) Priority: 27.06.2015 JP 2015129337
(71) Applicant: Eagle Industry Co., Ltd., Minato-ku Tokyo 105-8587 (JP)
(72) Inventor: KATORI, Hikaru, Tokyo 105-8587 (JP); ITADANI, Masatoshi, Tokyo 105-8587 (JP); TOKUNAGA, Yuichiro, Tokyo 105-8587 (JP); CHIBA, Keiichi, Tokyo 105-8587 (JP)
(74) Representative: TBK
(86) International application number: PCT/JP2016/068202
(87) International publication number: WO 2017/002646

(57) **Abstract**

To prevent generation of cavitation in a pressure release groove and a radial groove without setting depths of the grooves to be deeper than necessary.

A sliding face S at least one sliding part of a pair of sliding parts is provided with positive pressure generation mechanisms 10 which generate dynamic pressure, an annular pressure release groove 11, and radial grooves 12 which intersect the pressure release groove 11, in which corners 13a and 13b at an intersecting portion of the pressure release groove 11 and the radial grooves 12 are each formed in a curved surface shape such that the pressure release groove 11 and the radial groove 12 are joined by a smooth curved surface.

## Description

### Technical Field

The present invention relates to sliding components suitable for, for example, mechanical seals, bearings, and other sliding units. In particular, the present invention relates to sliding components such as seal rings or bearings which reduce friction by interposing fluid between sliding faces and need to prevent leakage of fluid from the sliding faces.

### Background Art

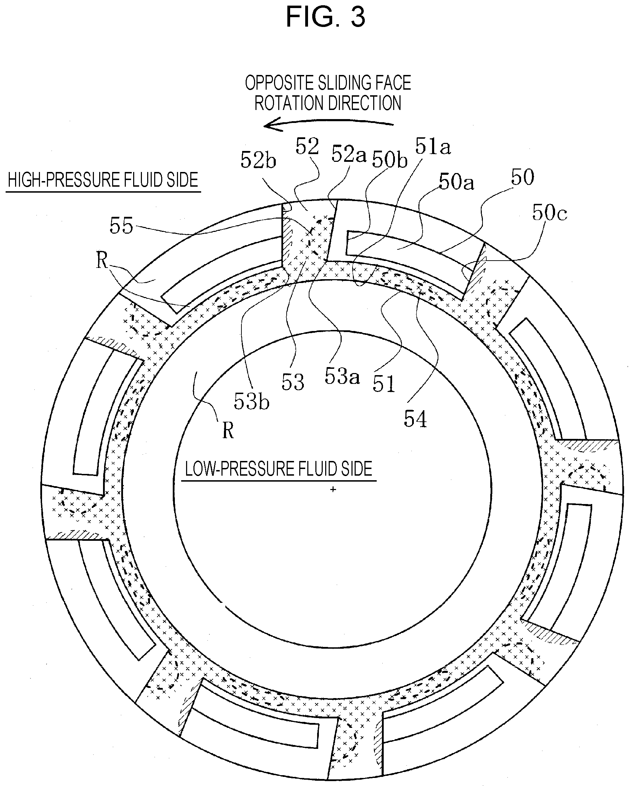

In a mechanical seal which is an example of a sliding component, the performance of the mechanical seal is evaluated according to a leakage rate, a wear rate, and torque. In the related art, the sliding material properties and the sliding face roughness of the mechanical seal are optimized to improve the performance, realizing low leakage, long life, and low torque. However, due to the growing awareness of environmental problems in recent years, there is a demand for further improvement in the performance of the mechanical seal and technical development beyond the framework of the related art has been required. For the related art which is related to a mechanical seal, as illustrated in FIG. 3, positive pressure generation mechanisms 50, for example, Rayleigh step mechanisms provided with generation mechanism grooves 50a and Rayleigh steps 50b are provided on a sliding face on a high-pressure fluid side (refer to Patent Document 1, for example). The eight positive pressure generation mechanisms 50 are separated from the high-pressure fluid side and a low-pressure fluid side by a land portion R, and are spaced equally in the circumferential direction.

Furthermore, an annular pressure release groove 51 is provided continuously in the circumferential direction so as to be positioned between the positive pressure generation mechanisms 50 and the low-pressure fluid side. The pressure release groove 51 is separated from the grooves 50a of the positive pressure generation mechanisms 50 by the land portion R in the radial direction.

Radial grooves 52 are provided so as to communicate the pressure release groove 51 with the high-pressure fluid side. The radial grooves 52 are located at such positions as to be in contact with end portions 50c of the groove 50a of the positive pressure generation mechanisms 50 on the upstream side in the circumferential direction and the eight radial grooves 52 are equally spaced in the circumferential direction so as to communicate the pressure release groove 51 with the high-pressure fluid side. The pressure release groove 51 and the radial grooves 52 are deeper than the grooves 50a of the positive pressure generation mechanisms 50. In the present example, the radial grooves 52 are formed to be wider than the pressure release groove 51.

The positive pressure generation mechanisms 50 generate positive pressure (dynamic pressure) to increase the gap between the sliding faces which slide relative to each other by generating positive pressure (dynamic pressure), and form a liquid film between the sliding faces, thereby improving lubricity.

The pressure release groove 51 is for preventing the fluid from leaking into the low-pressure fluid side by releasing the positive pressure (the dynamic pressure) on the high-pressure side, which is generated by the positive pressure generation mechanisms 50, to the pressure of the high-pressure side fluid. The fluid which is apt to flow to the low-pressure fluid side by the pressure on the high-pressure side which is generated by the positive pressure generation mechanisms 50 is guided to the pressure release groove 51. The pressure release groove 51 serves the role of allowing the fluid to escape to the high-pressure fluid side via the radial grooves 52. Therefore, the sealing properties of the sliding faces are improved further.

Incidentally, in T-shaped portions 53 at which the pressure release groove 51 and the radial grooves 52 intersect each other, corner portions 53a and 53b are formed at the corners at which outer peripheral side walls 51a of the pressure release groove 51 and opposite side walls 52a and 52b of the radial grooves 52 are connected.

Currently, when the opposite sliding face rotates in the counterclockwise direction as indicated by the arrow, in the pressure release groove 51 and the radial grooves 52, due to the presence of the corner portions 53a and 53b, negative pressure is generated at positions indicated by cross-shaped hatching, and positive pressure is generated at positions indicated by diagonal hatching.

In other words, the generation of the negative pressure in the pressure release groove 51 is accompanied by a sudden contraction phenomenon due to the presence of the corner portions 53b on the downstream side, and the negative pressure is the greatest in the vicinity of the center in the circumferential direction interposed between two adjacent radial grooves 52. In a case in which the pressure release groove 51 does not have a certain amount of depth, cavitation occurs easily in portions 54 having the greatest negative pressure in the vicinities of the center of the circumferential direction.

The generation of the negative pressure in the radial grooves 52 is caused by a sudden change in the depths of side walls 52a on the upstream side; furthermore, the presence of the corner portions 53a on the upstream side promotes the generation of the negative pressure, and the negative pressure in the vicinities of the side walls 52a of the upstream side becomes the greatest. In a case in which the radial grooves 52 does not have a certain amount of depth, the cavitation occurs easily at portions 55 having the greatest negative pressure in the vicinities of the side walls 52a on the upstream side.

### CITATION LIST

### PATENT DOCUMENTS

[Patent Document 1] WO2014/174725 (FIGS. 6 and 7)

### SUMMARY OF THE INVENTION

### Problem to be Solved by the Invention

In the related art described above, when cavitation occurs in the pressure release groove 51 and the radial grooves 52, the necessary fluid is not supplied to the grooves 50a of the positive pressure generation mechanisms 50 and a dynamic pressure generation effect becomes unstable.

It is conceivable to increase the depths of the pressure release groove 51 and the radial grooves 52 to depths at which the cavitation does not occur; however, when the depths of the grooves are set to be deep, there are problems in that it is not possible to create the sliding components using a mold and mass productivity is lost.

An object of the present invention is to provide a sliding component that stabilizes a dynamic pressure (a positive pressure) generation effect in a positive pressure generation mechanism to improve the lubricity of the sliding faces by preventing the occurrence of cavitation in a pressure release groove and a radial groove without setting the depths of the grooves to be deeper than necessary.

### Means for Solving Problem

To achieve the object described above, a sliding component according to a first aspect of the present invention includes a pair of sliding parts which slide relative to each other, in which one of the sliding parts is a stationary-side seal ring, the other of the sliding parts is a rotating-side seal ring, the seal rings have a sliding face which is radially formed for sealing leakage of a sealed fluid, in which the sliding face of at least one sliding parts of the pair of sliding parts is provided with a positive pressure generation mechanism which generates dynamic pressure, an annular pressure release groove, and a radial groove which intersects the pressure release groove, and in which corners at an intersecting portion of the pressure release groove and the radial groove are each formed in a curved surface shape such that the pressure release groove and the radial groove are joined by a smooth curved surface.

According to the first aspect, it is possible to prevent the occurrence of cavitation in the pressure release groove and the radial groove without setting the depths of the grooves to be deeper than necessary, thereby stabilizing dynamic pressure (positive pressure) generation effect in the positive pressure generation mechanism to improve the lubricity of the sliding faces.

According to a second aspect of the present invention, in the sliding component of the first aspect, the corners may be each formed in a round curved surface shape.

According to the second aspect, it is possible to easily form the smooth curved surface shape.

### Effects of the Invention

The present invention has the following excellent effects.
(1) Since the corners at the intersecting portion of the pressure release groove and the radial groove are each formed in a curved surface shape such that the pressure release groove and the radial groove are joined by a smooth curved surface, it is possible to prevent the occurrence of cavitation in the pressure release groove and the radial groove without setting the depths of the grooves deeper than necessary, thereby stabilizing the dynamic pressure (the positive pressure) generation effect in the positive pressure generation mechanism to improve the lubricity of the sliding faces.
(2) Due to the corners being each formed in the round curved surface shape, it is possible to easily form the smooth curved surface shape.

### BRIEF DESCRIPTION OF THE DRAWINGS

FIG. 1 is a vertical sectional diagram illustrating an example of a mechanical seal according to a first embodiment of the present invention.
FIG. 2 illustrates a sliding face of a sliding component according to the first embodiment of the present invention.
FIG. 3 is a diagram illustrating the related art.

### DESCRIPTION OF EMBODIMENTS

Hereinafter, forms for carrying out the invention will be described by example based on the embodiments with reference to the drawings. However, the dimensions, material properties, shapes, relative arrangements, and the like of the components which are described in the embodiments are not intended to limit the scope of the present invention unless explicitly stated otherwise.

### First Embodiment

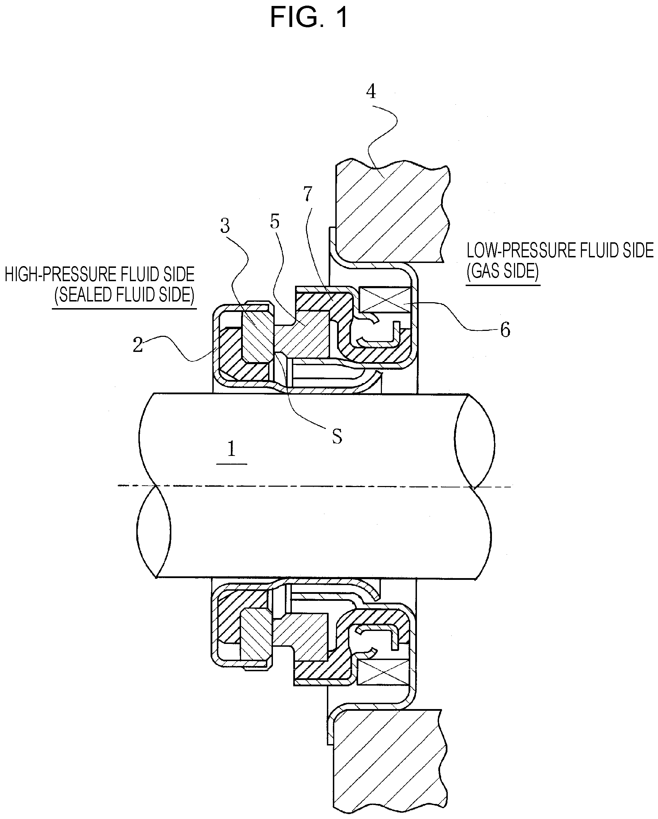

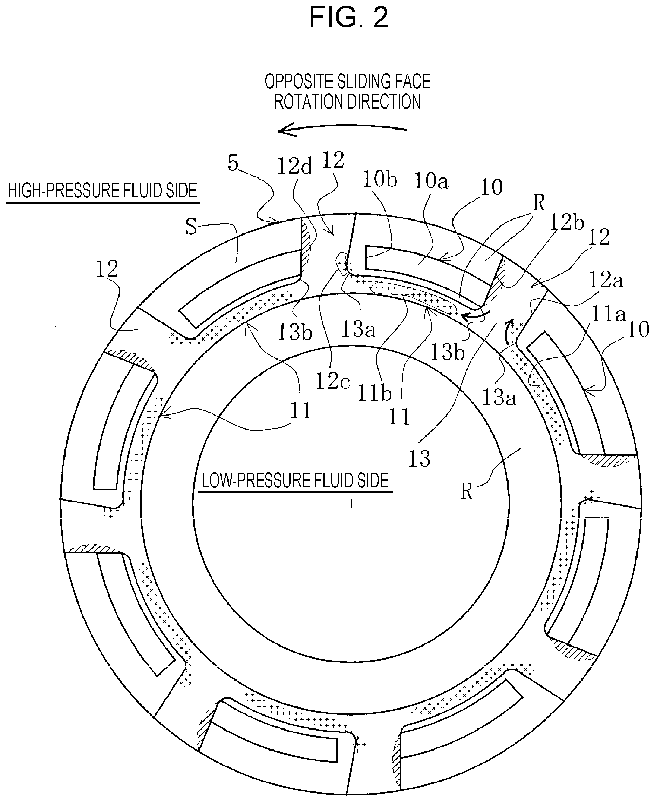

A description will be given of a sliding component according to a first embodiment of the present invention, with reference to FIGS. 1 and 2.

In the present embodiment, the description will be given exemplifying a mechanical seal which is an example of the sliding component. The outer peripheral side of the sliding component which configures the mechanical seal will be described as a high-pressure fluid side (a sealed fluid side) and the inner peripheral side thereof as a low-pressure fluid side (a gas side); however, the present invention is not limited thereto, and it is possible to apply to a case in which the inner peripheral side may be the high-pressure fluid side and the outer peripheral side may be the low-pressure fluid side.

FIG. 1 is a vertical sectional diagram illustrating an example of the mechanical seal, which is an inside mechanical seal in a form in which a sealed fluid on the high-pressure fluid side which is apt to leak from the outer periphery of the sliding faces toward the inner periphery is sealed. The mechanical seal is provided with a rotating-side seal ring 3 which has an annular shape and is one of the sliding parts which is provided in a state of being capable of rotating integrally with a rotating shaft 1 via a sleeve 2 on the rotating shaft 1 side which drives a pump impeller (not illustrated) on the high-pressure fluid side, and a stationary-side seal ring 5 which has an annular shape and is the other sliding part which is provided in a non-rotating state in a housing 4 of the pump and in a state of being capable of moving in the axial direction, and sliding faces S which are mirror finished by lapping or the like are configured to slide in close contact with each other due to a coiled wave spring 6 and bellows 7 which urge the stationary-side seal ring 5 in the axial direction. In other words, the mechanical seal prevents the sealed fluid from flowing out from the outer circumference of the rotating shaft 1 to the gas side of the sliding faces S of the rotating-side seal ring 3 and the stationary-side seal ring 5.

FIG. 2 illustrates the sliding face of the sliding component according to the first embodiment of the present invention. In the present embodiment, an example in which positive pressure generation mechanisms, a pressure release groove, and radial grooves according to the present invention are formed in the sliding face S of the stationary-side seal ring 5 of FIG. 1 as an example will be described.

The same applies to a case in which the positive pressure generation mechanisms, the pressure release groove, and the radial grooves according to the present invention are formed in the sliding face of the rotating-side seal ring 3.

In FIG. 2, the outer peripheral side of the sliding face S of the stationary-side seal ring 5 is the high-pressure fluid side, the inner peripheral side is the low-pressure fluid side, for example, the gas side, and the opposite sliding face rotates in a counterclockwise direction.

Positive pressure generation mechanisms 10, for example, Rayleigh step mechanisms which are provided with grooves 10a and Rayleigh steps 10b are provided on the sliding face on the high-pressure fluid side of the sliding faces S. The positive pressure generation mechanisms 10 are separated from the high-pressure fluid side and a low-pressure fluid side by a smooth portion R (may be referred to as the "land portion R" in the present invention) of the sliding face S, and the eight positive pressure generation mechanisms 10 are spaced equally in the circumferential direction.

In the present embodiment, the eight positive pressure generation mechanisms 10 are spaced equally; however, the configuration is not limited thereto, and one or more positive pressure generation mechanisms 10 may be provided.

Furthermore, an annular pressure release groove 11 is provided continuously in the circumferential direction so as to be positioned between the low-pressure fluid side and the positive pressure generation mechanisms 10. The pressure release groove 11 is separated from the grooves 10a of the positive pressure generation mechanisms 10 by the land portion R in the radial direction.

Radial grooves 12 are provided so as to communicate the pressure release groove 11 with the high-pressure fluid side. The eight radial grooves 12 are equally spaced at such positions as to be in contact with end portions of the groove 10a of the positive pressure generation mechanisms 10 on the upstream side in the circumferential direction. The pressure release groove 11 and the radial grooves 12 are deeper than the grooves 10a of the positive pressure generation mechanisms 10. In the present example, the radial grooves 12 are formed to be wider than the pressure release groove 11.

The positive pressure generation mechanisms 10 generate positive pressure (dynamic pressure) to increase the gap between the sliding faces which slide relative to each other, and form a liquid film between the sliding faces, thereby improving lubricity.

The pressure release groove 11 is for preventing the fluid from flowing to the low-pressure fluid side and leaking by releasing the positive pressure (the dynamic pressure) on the high-pressure side which is generated by the positive pressure generation mechanisms 10 to the pressure of the high-pressure side fluid. The fluid which is apt to flow to the low-pressure fluid side is guided into the pressure release groove 11 by the pressure on the high-pressure side which is generated by the positive pressure generation mechanisms 10. The pressure release groove 11 serves the role of allowing the fluid to escape to the high-pressure fluid side.

In T-shaped groove portions 13 at which the pressure release groove 11 and the radial grooves 12 intersect each other, corners 13a and 13b at which outer peripheral side walls 11a of the pressure release groove 11 and opposite side walls 12a and 12b of the radial grooves 12 are connected, are formed such that the outer peripheral side walls 11a of the pressure release groove 11 and the opposite side walls 12a or 12b of the radial grooves 12 are joined by smooth curved surfaces protruded toward the T-shaped groove portion 13.

In the present embodiment, the corners 13a and 13b are each formed in a round curved surface shape protruded toward the T-shaped groove portion 13. Therefore, it is possible to easily form the curved surface shape.

Now, when the opposite sliding face rotates in the counterclockwise direction as indicated by the arrow, in the pressure release groove 11 and the radial grooves 12, negative pressure is generated at the positions which are indicated by the cross-shaped hatching, that is, in circumferential middle vicinities 11b in the pressure release groove 11 each interposed between the adjacent radial grooves 12 and 12 , and vicinities 12c in the radial grooves 12 each extending outward in the radial direction along the side wall 12a on the upstream side from the corner 13a on the upstream side.

In addition, positive pressure is generated at positions 12d in the vicinities of the side walls 12a on the downstream side of the radial grooves 12, which are indicated by diagonal hatching.

However, in the present invention, the corners 13a and 13b are formed such that the outer peripheral side walls 11a of the pressure release groove 11 and the opposite side walls 12a and 12b of the radial grooves 12 are joined by smooth curved surfaces protruded toward the T-shaped groove portion 13. Therefore, even in a case in which the diameters of the sliding faces S, the widths of the sliding faces S, the relative sliding speed between the pair of sliding faces S, and the depths of the pressure release groove 11 and the radial grooves 12 are the same as those in the related art which is described above, a reduction in the occurrence of cavitation in the negative pressure generation regions 11b and 12c is empirically confirmed, as depicted in the following table.

**[Table 1]**

| Depths of Pressure Release Groove and Radial groove | Angular Corner Shape (Related Art) | Curved Corner Surface Shape (Present Invention) |
|---|---|---|
| 500µm | Occurrence of cavitation present in both pressure release groove and radial groove | No occurrence of cavitation in pressure release groove Occurrence of cavitation present in radial groove |
| 600µm | No occurrence of cavitation in pressure release groove Occurrence of cavitation present in radial groove | No occurrence of cavitation in both pressure release groove and radial groove |

Where the diameters of the sliding faces S, the widths of the sliding faces S, and the relative sliding speed between the pair of sliding faces S in the present invention are the same as those in the related art.

In other words, the generation of the negative pressure in the pressure release groove 11 accompanies the contraction phenomenon which is caused by the presence of corners 13b on the downstream side; however, in the present invention, since the corners 13b on the downstream side are each formed in a smooth curved surface shape protruded toward the T-shaped groove portion 13 , the sudden contraction is eased, a continuous flow as indicated by an arrow in FIG. 2 is generated, and the negative pressure at which cavitation occurs is not reached.

The generation of the negative pressure in the radial grooves 12 is caused by a sudden change in the depths of the side walls 12a on the upstream side; however, since the corners 13a on the upstream side are each formed in a smooth curved surface shape which is protruded toward the T-shaped groove portion 13, as indicated by the arrow of FIG. 2, the fluid is flowed into the vicinities of the side walls 12a on the upstream side, the generation of the negative pressure is reduced, and the negative pressure at which cavitation occurs is not reached.

According to the configuration of the first embodiment which is described above, the following effects are achieved.
(1) Since the corners 13a and 13b at an intersecting portion 13 of the pressure release groove 11 and the radial grooves 12 are each formed in a curved surface shape such that the pressure release groove 11 and each radial groove 12 are joined by a smooth curved surface, it is possible to prevent the occurrence of cavitation in the grooves without setting the depths of the pressure release groove 11 and the radial grooves 12 deeper than necessary, and it is thus possible to stabilize the dynamic pressure (the positive pressure) generation effect in the positive pressure generation mechanism to improve the lubricity of the sliding faces.
(2) Due to the corners 13a and 13b being each formed in the round curved surface shape, it is possible to easily form the smooth curved surface shape.

Hereinabove, although the embodiments of the present invention are described with reference to the drawings, specific configurations are not limited to the embodiments, and any changes or additions made without departing from the scope of the present invention are included in the present invention.

For example, in the embodiments, an example in which the sliding part is used for one of the pair of rotating-side seal ring and the stationary-side seal ring in a mechanical sealing device is described; however, it is also possible to use the sliding part as a bearing sliding part which slides with a rotating shaft while sealing a lubricant on one side in the axial direction of a cylindrical sliding face.

For example, in the embodiments, a case in which the high-pressure sealed fluid is present on the outer peripheral side is described; however, it is also possible to apply to a case in which the high-pressure fluid may be present on the inner peripheral side.

For example, in the embodiments, a case in which the positive pressure generation mechanisms 10, the pressure release groove 11, and the radial grooves 12 are formed on the sliding face S of the stationary-side seal ring 5 is described; however, the configuration is not limited thereto, and positive pressure generation mechanisms, a pressure release groove, and radial grooves may be formed on the sliding face of the rotating-side seal ring 3.

For example, in the embodiments, a case in which the eight positive pressure generation mechanisms 10 are spaced equally and the eight radial grooves 12 are spaced equally is described; however, the configuration is not limited thereto, and one or more positive pressure generation mechanisms may be provided, and one or more radial grooves may be provided.

For example, in the embodiments, a case in which the corners 13a and 13b are each formed in the round curved surface shape is described; however, the configuration is not limited thereto, and such a shape that the fluid flows smoothly and the fluid does not separate from the corners 13a and 13b, for example, a curved surface shape of an elliptical arc may be applicable.

### Reference Sign List

1 rotating shaft
2 sleeve
3 rotating-side seal ring
4 housing
5 stationary-side seal ring
6 coiled wave spring
7 bellows
10 positive pressure generation mechanism
10a groove
10b Rayleigh step
11 pressure release groove
11a outer peripheral side wall
11b circumferential middle vicinity
12 radial groove
12a side wall on upstream side
12b side wall on downstream side
12c vicinity extending outward in radial direction from corner on upstream side
12d position indicated by diagonal hatching in vicinity of side wall on downstream side
13 T-shaped groove portion 13a corner on upstream side
13b corner on downstream side
S sliding face
R land portion

## Claims

1. A sliding component comprising:
a pair of sliding parts which slide relative to each other,
wherein one of the sliding parts is a stationary-side seal ring, the other of the sliding parts is a rotating-side seal ring, the seal rings each have a sliding face which is radially formed for sealing leakage of a sealed fluid,
wherein the sliding face of at least one sliding parts of the pair of sliding parts is provided with a positive pressure generation mechanism which generates dynamic pressure, an annular pressure release groove, and a radial groove which intersects the pressure release groove, and
wherein corners at an intersecting portion of the pressure release groove and the radial groove are each formed in a curved surface shape such that the pressure release groove and the radial groove are joined by a smooth curved surface.

2. The sliding component according to claim 1,
wherein the corner is formed in a round curved surface shape.
